# EUROPÄISCHE PATENTSCHRIFT

(11) **EP 1 030 875 B1**
(45) Veröffentlichungstag und Bekanntmachung des Hinweises auf die Patenterteilung: **08.01.2003**
(21) Anmeldenummer: 98959816.4
(22) Anmeldetag: 30.10.1998
(51) Int. Cl.: C08J 3/18, C08J 3/20, C09K 3/10

(54) **VERFAHREN ZUR ELASTIFIZIERUNG UND EXTENDERUNG VON POLYMEREN MIT PVC-HOMO- UND COPOLYMEREN ODER MIT EVA-COPOLYMEREN IN GELFORM**
METHOD FOR ELASTIFYING AND EXTENDING POLYMERS WITH PVC-HOMO- AND COPOLYMERS OR WITH EVA-COPOLYMERS IN GEL FORM
PROCEDE POUR L'ELASTIFICATION ET LA DILUTION DE POLYMERES AVEC DES HOMO- ET COPOLYMERES DE PVC OU AVEC DES COPOLYMERES D'EVA SOUS FORME DE GEL

(30) Priorität: 10.11.1997 DE 19749554
(43) Veröffentlichungstag der Anmeldung: 30.08.2000
(73) Patentinhaber: Henkel Teroson GmbH, 69123 Heidelberg (DE)
(72) Erfinder: SCHÄTZLE, Michael, D-69190 Walldorf (DE); BRIDE, Gabriele, D-69226 Nu loch (DE); KERN, Gisbert, D-68259 Mannheim-Freudenheim (DE); LEPKA, Wolfgang, D-69126 Heidelberg (DE)
(74) Vertreter: Mathes, Nikolaus, Dr.
(86) Internationale Anmeldenummer: EP9806890
(87) Internationale Veröffentlichungsnummer: WO99024494

(56) Entgegenhaltungen:
- DE-C- 4 019 074

## Beschreibung

Die Erfindung betrifft ein Verfahren zur Elastifizierung und Extenderung von Polymeren mit EVA-Copolymeren, PVC bzw. PVC-Copolymeren in Gelform sowie die Verwendung derartig hergestellter Zusammensetzungen.

Formmassen bzw. Fugendichtungsmassen auf Basis von Mischungen von Acrylat-Copolymeren-Dispersionen mit Füllstoffen, Pigmenten und Weichmachern weisen nur im geringen Maße elastische Eigenschaften auf, wobei mit steigendem Anteil an Weichmachern die Klebrigkeit der aus diesen Mischungen hergestellten Formmassen zunimmt. Derartige Formmassen bzw. Fugendichtungsmassen sind nur für eine Gesamtverformung von ca. 10 % geeignet, so daß sie für die Abdichtung zahlreicher Fugen im Hochbaubereich trotz ihres günstigen Preises nicht geeignet sind.

Weiterhin sind feuchtigkeitshärtende Ein-Komponenten-Form- und Dichtungsmassen auf der Basis sogenannter MS-Polymerer (Firma Kaneka) bekannt. Diese Dichtungsmassen enthalten als Prepolymere die vorgenannten MS-Polymere, die durch Luftfeuchtigkeit vernetzbar sind und bei denen es sich um Verbindungen mit Silylendgruppen mit mindestens einem hydrolysierbaren Substituenten am Siliciumatom handelt. Derartige Prepolymere sowie daraus hergestellte Form- und Dichtungsmassen sind aus der DE-A-40 19 074 und der DE-A-38 16 808 bekannt. In der letztgenannten Schrift werden aus diesen MS-Polymeren hergestellte Form- und Dichtungsmassen ausführlich unter Bezugnahme auf weitere Veröffentlichungen beschrieben.

Auf MS-Polymeren basierende Form- und Dichtungsmassen reagieren bei Zutritt von Feuchtigkeit aus der Luft zu Elastomeren, wobei die Oberfläche sehr häufig eine erhebliche Klebrigkeit aufweist. Daher ist der Einsatz derartiger Massen überall dort nicht möglich, wo eine Verschmutzung durch Staub erfolgt bzw. zu befürchten ist.

Der Erfindung lag daher die Aufgabe zugrunde, diese Oberflächenklebrigkeit von Form- und Dichtmassen so zu vermindern, daß bei Kontakt mit Stäuben unterschiedlicher Art eine Verschmutzung mit bleibendem Charakter ausgeschlossen wird.

Die erfindungsgemäße Lösung dieser Aufgabe ist den Patentansprüchen zu entnehmen. Sie besteht im wesentlichen darin, daß den vorgenannten Form- und Dichtmassen ein Gel auf der Basis eines Ethylenvinylacetat-Copolymers (EVA), eines Polyvinylchlorid-Homopolymers (PVC) oder eines Vinylchlorid/Vinylacetat-Copolymers (PVC-Copolymer) und eines Weichmachers und Wachs zugesetzt wird.

Die Verwendung von Vinylacetat-Homo- und/oder Copolymeren in Klebstoffen und Dichtstoffen ist an sich bekannt. So beschreibt die JP 07197010 A/95 eine zweikomponentige Dichtstoffzusammensetzung bestehend aus einer isocyanatgruppenhaltigen Komponente und einem niedermolekularen hydroxifunktionellen Acrylatcopolymer, das Vinylacetat als Comonomer enthält. Dieser Dichtstoff hat geringe Klebrigkeit an der Oberfläche. Eine Verwendung eines Ethylenvinylacetat-Gels wird nicht offenbart.

Die JP-A-87/64881 beschreibt einen nichtklebrigen Kontaktklebstoff, enthaltend ein thermoplastisches Harz und einen Weichmacher. wobei das thermoplastische Harz u. a. ein Ethylenvinylacetatcopolymer sein kann.

Die EP-A-295 727 beschreibt Latices aus Interpolymeren aus Vinylacetat. Ethylen und einem Vinylester einer tertiären aliphatischen Carbonsäure, in der die Carbonsäurekomponente 9 Kohlenstoffatome enthält. Diese Filme zeichnen sich durch geringe Klebrigkeit aus.

Ein Verfahren zur Elastifizierung und Extenderung von Polymerzusammensetzungen aus der Gruppe der Acrylat-Copolymeren-Dispersionen, reaktiven Polyurethanpolymeren, MS-Polymeren, Polysulfiden oder Silikonkautschuken durch den Zusatz von EVA-Gelen wird in keinem der vorgenannten Dokumente erwähnt.

Zur Durchführung des erfindungsgemäßen Verfahrens wird zunächst ein Gel aus EVA, PVC oder PVC-Copolymer, Weichmacher und Wachs sowie ggf. Benzoylchlorid oder Zusatzmittel TI (Hersteller Firma Bayer) gefertigt. Dazu wird in einem Rührkessel die Gesamtmenge des notwendigen Weichmachers vorgelegt, danach werden EVA, PVC oder PVC-Copolymer und Wachs unter Rühren zugegeben. Anschließend wird diese Mischung unter Rühren auf ca. 125 °C hochgeheizt und so lange weiter gerührt, bis eine klare, homogene Lösung erreicht wird. Anschließend wird für 30 Minuten bei dieser Temperatur weitergerührt. Anschließend werden ggf. 0,1 Gew.-% Benzoylchlorid oder p-Toluolsulfonylisocyanat (Zusatzmittel TI) zugegeben. Zur Zwischenlagerung wird dieses Gel in ein luftdicht zu verschließendes Gefäß abgefüllt, worauf das Zwischenprodukt auf Raumtemperatur abgekühlt wird.

In einem zweiten Arbeitsschritt wird dann das so gefertigte Gel mit den übrigen Bestandteilen der Form- bzw. Dichtmasse in einem Planetendissolver bis zur Homogenität durchmischt. Üblicherweise beinhalten diese Bestandteile der Formund Dichtmassen Polymerzusammensetzungen ausgewählt aus der Gruppe der MS-Polymeren (Firma Kaneka) oder Acrylat-Copolymer-Dispersionen, es können jedoch auch Polyurethanpolymere, Polysulfidpolymere oder Silikonkautschuke eingesetzt werden. Geeignete MS-Polymere sind in der DE-A-40 19 074 sowie in der DE-A-38 16 808 unter Bezugnahme auf weitere Veröffentlichungen beschrieben.

Die Form- und Dichtmassen enthalten weiterhin anorganische Füllstoffe wie Ruß, Calciumcarbonat und Pigmente wie Titandioxid und dgl. sowie Weichmacher, insbesondere Phthalsäureester wie Diisononylphthalat oder Alkylsulfonsäureester des Phenols wie das Mesamoll (Firma Bayer) oder Phosphorsäureester wie Trikresylphosphat. Schließlich können die Massen übliche UV-Stabilisierungsmittel und Alterungsschutzmittel enthalten sowie organofunktionelle Silane wie z. B. 3-Glycidyloxypropyl- oder 3-Aminopropyltrimethoxysilan oder Vinyltri-methoxysilan vor allem zur Verbesserung der Haftung auf Glas, Metallen usw. enthalten.

Weiterhin enthalten insbesondere die feuchtigkeitsreaktiven einkomponentigen Massen metallorganische Zinnverbindungen zur Beschleunigung der Aushärtung sowie Feuchtigkeitsfänger wie Carbonsäurechloride, beispielsweise Benzoylchlorid oder das p-Toluolsulfonylisocyanat (Zusatzmittel TI, Firma Bayer).

Überraschenderweise zeigen die Form- und Dichtmassen auf der Basis von MS-Polymeren bei der Verwendung der erfindungsgemäßen Gele eine erhebliche Reduzierung der Oberflächenklebrigkeit, diese Klebrigkeit nimmt mit steigendem Anteil an EVA-Copolymeren, PVC oder PVC-Copolymeren trotz des damit einhergehenden hohen Weichmacheranteils ab. Zusätzlich wird ein erheblicher wirtschaftlicher Vorteil erzielt, da bis ca. 45 % des ursprünglichen MS-Polymeren-Anteils durch das preiswertere Gel substituiert werden kann.

Wie bereits eingangs erwähnt, weisen Mischungen von Acrylat-Copolymeren-Dispersionen mit Füllstoffen, Pigmenten und Weichmachern nur in geringem Maße elastische Eigenschaften auf, wobei mit steigendem Anteil an Weichmacher die Klebrigkeit daraus hergestellter Formmassen zunimmt. Durch den Zusatz der erfindungsgemäßen EVA, PVC- oder PVC-Copolymer-Gele ggf. in Kombination mit Emulgatoren können elastische Formmassen hergestellt werden, die eine Gesamtverformung von 25 % erreichen. Gegenüber der sonst üblichen Gesamtverformung von Acrylat-Dispersions-Formmassen von etwa 10 % ist dies eine unerwartet hohe Verbesserung. Im Vergleich zu den üblichen elastischen Formmassen auf Basis von Polysulfiden, modifizierten Silikonkautschuk, Polyurethanen und Silikonkautschuk sind derartige Formmassen auf Basis von Acrylat-Copolymer-Dispersionen mit EVA, PVC- oder PVC-Copolymer-Gelen wesentlich kostengünstiger, wobei die sonstigen Eigenschaften wie Elastizitätsmodul, Gesamtverformung und Alterungsbeständigkeit vergleichbar sind.

Zur näheren Erläuterung der Erfindung sollen die nachfolgenden Beispiele dienen, auf die die Erfindung jedoch nicht beschränkt ist.

### Beispiele 1 bis 3

Aus 77 Teilen Mesamoll, 12 Teilen EVA-Polymer (Vinylacetatanteil 40 %) und 11 Teilen Mikrowachs wurde ein EVA-Gel hergestellt. Dazu wurde in einem Rührkessel der gesamte Weichmacher vorgelegt, danach wurden unter Rühren EVA-Polymer und Wachs zugegeben. Anschließend wurde auf etwa 125 °C hochgeheizt und so lange gerührt, bis eine klare homogene Lösung erreicht wurde.

Anschließend wurde für 30 Minuten diese Temperatur gehalten und weitergerührt. Zum Abschluß wurde 0.1 Gew.-% Zusatzmittel TI hinzugegeben und die Mischung in ein luftdicht zu verschließendes Gefäß abgefüllt und auf Raumtemperatur abkühlen gelassen.

In den nachfolgenden Beispielen wurde der handelsübliche Dichtstoff Terostat 930 (Gesamtgehalt an MS-Polymeren und Weichmacher 42,25 Gew.-%) mit dem oben beschriebenen EVA-Gel dergestalt modifiziert, daß der Polymergehalt an MS-Polymeren durch das erfindungsgemäße EVA-Gel anteilig um 5 Gew.-%, 10 Gew.-% bzw. 15 Gew.-% substituiert wurde.

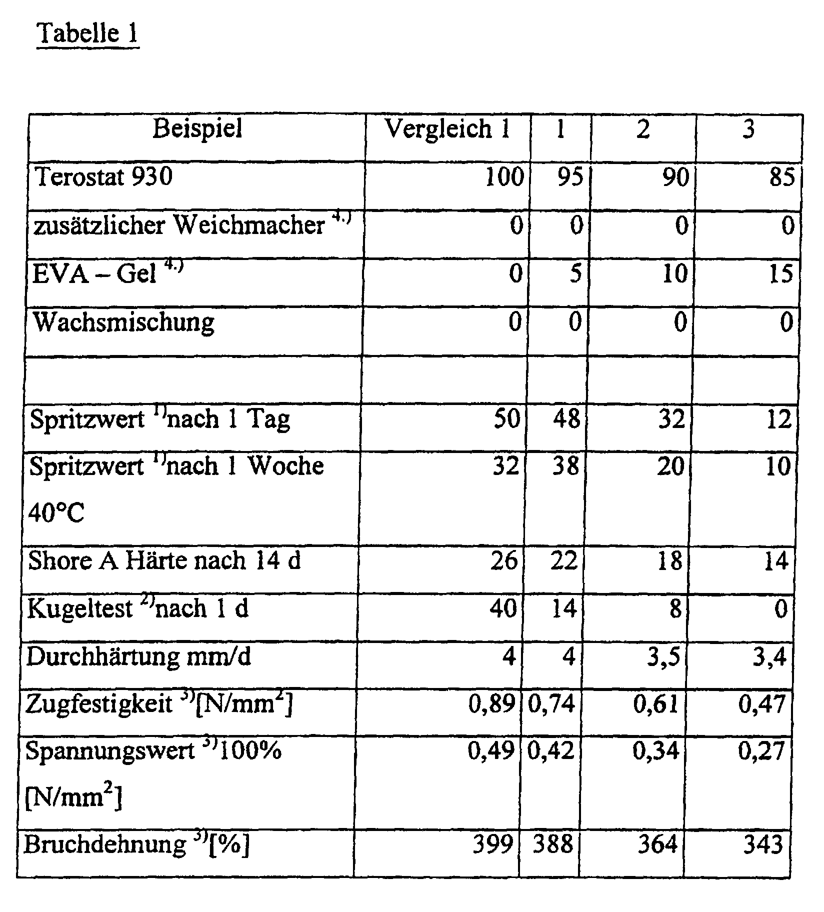

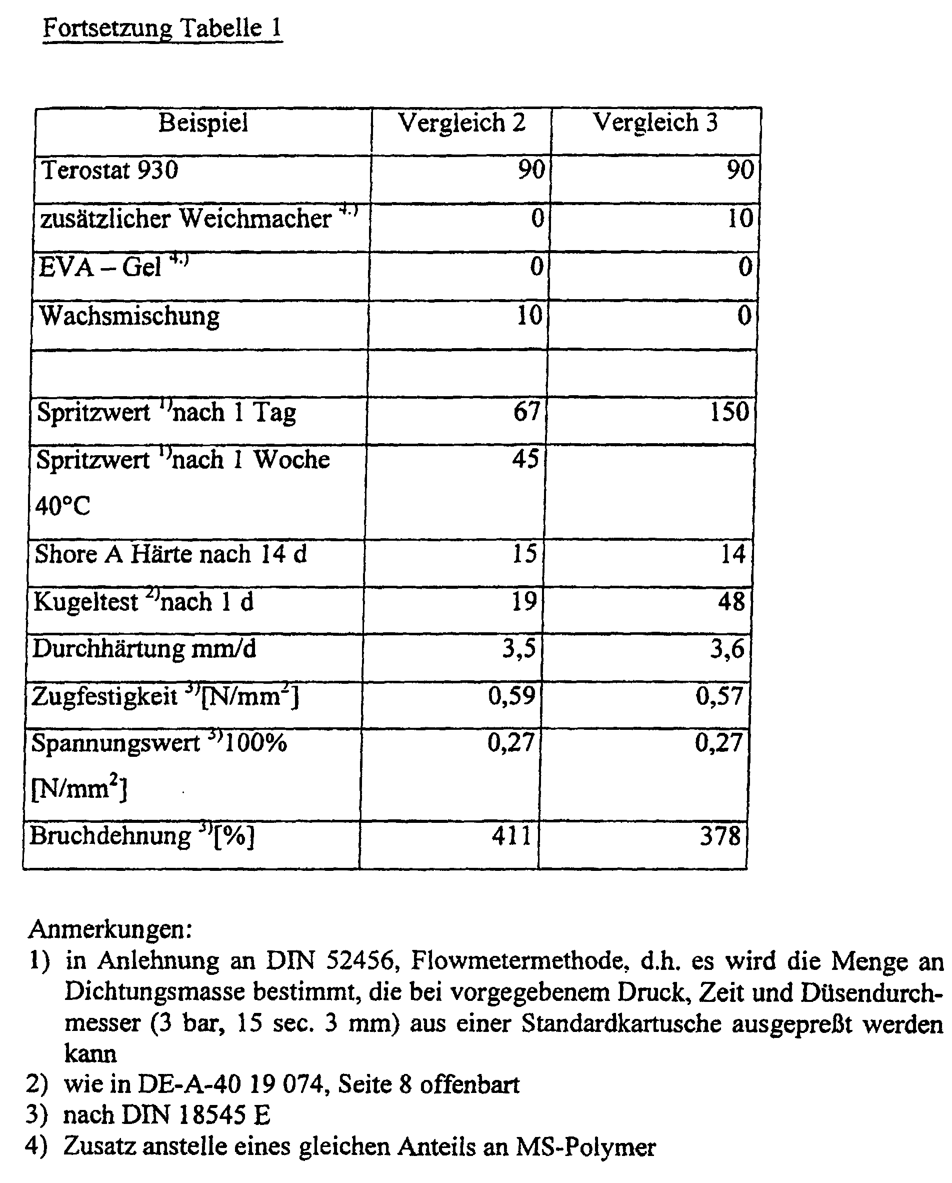

### Beispiele 4 bis 6

Analog zu den Beispielen 1 bis 3 wurde aus 85 Teilen Mesamoll, 8 Teilen PVC-Copolymer (Vinylacetatanteil 5 %) und 7 Teilen Mikrowachs ein PVC-Copolymer-Gel hergestellt. Abweichend zu den Beispielen 1 bis 3 wurde kein Zusatzmittel TI hinzugefügt.

**Tabelle 2**

| Beispiel | 4 | 5 | 6 |
|---|---|---|---|
| Terostat 930 | 95 | 90 | 85 |
| zusätzlicher Weichmacher ^{4.)} | 0 | 0 | 0 |
| EVA-Gel^{4.)} | 5 | 10 | 15 |
| Wachsmischung | 0 | 0 | 0 |
| | | | |
| Spritzwert ¹⁾nach 1 Tag | 87 | 102 | 110 |
| Shore A Härte nach 14 d | 21 | 16 | 10 |
| Kugeltest ²⁾nach 1 d | 1 | 1 | 3 |
| Durchhärtung mm/d | 3,1 | 3,1 | 2,7 |
| Zugfestigkeit ³⁾[N/mm²] | 0,58 | 0,43 | 0,64 |
| Spannungswert ³⁾100% [N/mm²] | 0,45 | 0,35 | 0,52 |
| Bruchdehnung ³⁾[%] | 379 | 311 | 329 |

| | | | |
|---|---|---|---|
| Anmerkungen: 1) in Anlehnung an DIN 52456, Flowmetermethode, d.h. es wird die Menge an Dichtungsmasse bestimmt, die bei vorgegebenem Druck, Zeit und Düsendurchmesser (3 bar, 15 sec. 3 mm) aus einer Standardkartusche ausgepreßt werden kann | | | |
| 2) wie in DE-A-40 19 074, Seite 8 offenbart | | | |
| 3) nach DIN 18545 E | | | |
| 4) Zusatz anstelle eines gleichen Anteils an MS-Polymer | | | |

Wie aus den Beispielen 1 bis 6 im Vergleich zum nichterfindungsgemäßen Vergleichsbeispiel 1 hervorgeht, wird mit steigendem Anteil an Gel in der Zusammensetzung die Oberflächenklebrigkeit immer niedriger, wobei sich die mechanischen Eigenschaften wie Zugfestigkeit. Spannungswert und Bruchdehnung noch im vertretbaren Rahmen halten. Die Oberflächenklebrigkeit wurde nach dem in der DE-A-40 19 074 auf Seite 8 offenbarten Kugeltest bestimmt. Dabei bedeutet ein hoher Wert eine starke Klebrigkeit, d.h. eine Kugel definierten Umfangs bewegt sich bei der Höhe H auf einer schiefen Ebene (definierte Länge). Auf dieser schiefen Ebene ist ein Fell der teilweise ausgehärteten Formmasse von etwa 2 mm Stärke aufgerakelt.

Um die möglichen Auswirkungen des Wachses im EVA-Gel zu überprüfen wurden die Vergleichsversuche 2 und 3 durchgeführt. Im Vergleichsversuch 2 wurde anstelle des EVA-Gels eine Wachsmischung bestehend aus 23 Teilen Wachs und 77 Teilen Mesamoll eingesetzt, im Vergleichsversuch 3 wurde das EVA-Gel durch einen zusätzlichen Weichmacheranteil von 10 Teilen ersetzt. In beiden Fällen wird eine erhebliche Oberflächenklebrigkeit gemäß Kugeltest beobachtet.

Zusammenfassend ist festzustellen, daß die EVA oder PVC-Copolymer-Gele in den o.g. Dichtstoff-Formulierungen hinsichtlich der mechanischen Eigenschaften den typischen Charakter eines Weichmachers erbringen, andererseits bei der Oberflächenklebrigkeit und der Verarbeitungsviskosität genau das Gegenteil eines erhöhten Weichmacheranteils bewirken.

### Beispiel 7 und Vergleichsbeispiel 4

Analog zu Beispiel 1 wurde ein Gel aus 88 Teilen Diisobutylphthalat (DIBP) 3 Teilen EVA-Polymer (Vinylacetatanteil 28 %) und 9 Teilen PVC-Copolymer (Vinylacetatanteil 5 %) hergestellt. Zum Abschluß erfolgte kein Zusatz an Zusatzmittel TI.

Zur erfindungsgemäßen Modifizierung des handelsüblichen Dichtstoffes Terostat 20 (Gesamtgehalt an Acryl-Copolymer-Dispersion und Weichmacher 42 Gew.-%) wurde dieser Dichtstoff dergestalt modifiziert, daß durch den Zusatz des erfindungsgemäßen Gels der Dispersionsgehalt um 6 % und der Kreide/Pigmentanteil um 20 % substituiert wurde.

**Tabelle 4**

| Beispiel | Vergleich 4 | 7 |
|---|---|---|
| Terostat 20 | 100 | 60 |
| Acryl-Dispersion/Weichmacheranteil | 42 | 26 |
| EVA/PVC-Copolymer-Gel | 0 | 40 |
| Gesamtverformung¹⁾ [%] | ca. 10 | 25 |
| Rückstellung bei 150 % Dehnung ²⁾ [%] | kohesiver Bruch | ca. 71 |
| Spannungswert ³⁾ 100 % [N/mm²] | 0,15 | 0,03 |
| Dehnung [%] | < 140 | > 150 |

| | | |
|---|---|---|
| Anmerkungen 1.) in Anlehnung an DIN 52455 | | |
| 2.) in Anlehnung an DIN 52458 | | |
| 3.) nach DIN 18545 E | | |

Wie aus dem Beispiel 7 im Vergleich zum nicht erfindungsgemäßen Vergleichsbeispiel 4 hervorgeht, werden durch den Zusatz des erfindungsgemäßen Gels die mechanischen Eigenschaften wie Spannungswert, Dehnung, Rückstellung und Gesamtverformung derartig verbessert, daß die Forderungen der DIN 18540 (Prüfbedingungen für Baudehnungsfugen-Dichtstoffe) nahezu erreicht werden.

Zusammenfassend ist festzustellen, daß die EVA/PVC-Copolymeren-Gele in der Dichtstoff-Formulierung gemäß Beispiel 7 auf Basis Acryl-Copolymeren-Dispersion hinsichtlich der mechanischen Eigenschaften den typischen Charakter eines Weichmachers erbringen, andererseits bei der Oberflächenklebrigkeit keine negativen Auswirkungen gegenüber dem nicht erfindungsgemäßen Vergleichsbeispiel 4 zeigen.

## Patentansprüche

1. Verfahren zur Elastifizierung und Extenderung von Polymerzusammensetzungen aus der Gruppe der Acrylat-Copolymeren-Dispersionen, reaktiven Polyurethanpolymeren, MS-Polymeren, Polysulfid oder Silikonkautschuk, **dadurch gekennzeichnet, daß** diesen ein Gel auf der Basis von PVC-Homopolymer, PVC-Copolymer oder Ethylenvinylacetat-Copolymer, sowie Weichmacher und Wachs zugesetzt wird, wobei die Herstellung des Gels die folgenden Schritte umfaßt:
a) Vorlegen des gesamten Weichmachers
b) Zugabe des EVA oder PVC und des Wachses unter Rühren
c) Erhitzen der Mischung unter Rühren auf etwa 125 °C bis eine klare homogene Lösung erreicht wird
d) weiteres Rühren bei dieser Temperatur für 30 Minuten
e) ggf. Zusatz von 0,1 Gew.-% Benzoylchlorid oder p-Toluolsulfonylisocyanat
f) Abkühlen auf Raumtemperatur.

2. Verfahren nach Anspruch 1, **dadurch gekennzeichnet, daß** das Gel der Polymermischung unter Rühren in einem Planetendissolver zugemischt wird.

3. Verfahren nach Anspruch 1 oder 2, **dadurch gekennzeichnet, daß** die Polymermischung weitere übliche Zusätze aus der Gruppe Weichmacher, Füllstoffe, Pigmente, Alterungsschutzmittel und/oder Haftvermittler enthält.

4. Verfahren nach einem der vorhergehenden Ansprüche, **dadurch gekennzeichnet, daß** das Gel aus 77 Gew.-% Alkylsulfonsäureester des Phenols, 12 Gew.-% EVA und 11 Gew.-% Mikrowachs besteht.

5. Verfahren nach einem der vorhergehenden Ansprüche, **dadurch gekennzeichnet, daß** das Gel aus 85 Gew.-% Alkylsulfonsäureester des Phenols, 8 Gew.-% PVC-Copolymer (Vinylacetatanteil 5 %) und 7 Gew.-% Mikrowachs besteht.

6. Verfahren nach einem der Ansprüche 1 bis 3, **dadurch gekennzeichnet, daß** das Gel aus 88 Gew.-% Diisobutylphthalat (DIBP), 3 Gew.-% EVA und 9 Gew.-% PVC-Copolymer (Vinylacetatanteil 5 %) besteht.

7. Verwendung der nach einem der vorhergehenden Ansprüche hergestellten Zusammensetzung als Fugendichtungsmassen, Kleb- und/oder Dichtstoffe.

## Claims

1. A method for elastifying and extending polymer compositions selected from the group consisting of acrylate copolymer dispersions, reactive polyurethane polymers, MS polymers, polysulfide and silicone rubber, which comprises adding to them a gel based on PVC homopolymer, PVC copolymer or ethylene-vinyl acetate copolymer and also plasticizer and wax, the preparation of the gel comprising the steps of:
a) initially charging the entire plasticizer
b) adding the EVA or PVC and the wax with stirring
c) heating the mixture with stirring to about 125°C until a clear homogeneous solution is obtained
d) further stirring at that temperature for 30 minutes
e) optionally adding 0.1% by weight of benzoyl chloride or p-sulfonyl isocyanate
f) cooling down to room temperature.

2. A method as claimed in claim 1, wherein the gel is mixed into the polymer mixture by stirring in a planetary dissolver.

3. A method as claimed in claim 1 or 2, wherein the polymer mixture contains further customary additives selected from the group consisting of plasticizers, fillers, pigments, aging inhibitors and/or adhesion promoters.

4. A method as claimed in any of the preceding claims, wherein the gel consists of 77% by weight of alkylsulfonic esters of phenol, 12% by weight of EVA and 11% by weight of microcrystalline wax.

5. A method as claimed in any of the preceding claims, wherein the gel consists of 85% by weight of alkylsulfonic esters of phenol, 8% by weight of PVC copolymer (vinyl acetate fraction 5%) and 7% by weight of microcrystalline wax.

6. A method as claimed in any of claims 1 to 3, wherein the gel consists of 88% by weight of diisobutyl phthalate (DIBP), 3% by weight of EVA and 9% by weight of PVC copolymer (vinyl acetate fraction 5%).

7. The method of using the composition produced according to any of the preceding claims as joint sealing materials, adhesives and/or sealants.

## Revendications

1. Procédé d'élastification et de dilution de compositions de polymères du groupe des dispersions de copolymères d'acrylate, des polymères de polyuréthane réactifs, des polymères MS, des polysulfures ou des caoutchoucs de silicone,
**caractérisé en ce qu'**
on y ajoute un gel à base d'homopolymère de PVC, de copolymère de PVC ou de copolymère d'acétate d'éthylène-vinyle, ainsi qu'un plastifiant et une cire, la préparation du gel comprenant les étapes suivantes :
a) Disposition dans l'ensemble du plastifiant,
b) Addition de l'EVA ou du PVC et de la cire tout en agitant,
c) Chauffage du mélange tout en agitant à environ 125°C jusqu'à obtention d'une solution homogène claire,
d) Poursuite de l'agitation à cette température pendant 30 minutes,
e) le cas échéant addition de 0,1 % en poids de chlorure de benzoyle ou d'isocyanate de p-toluène sulfonyle,
f) Refroidissement à la température ambiante.

2. Procédé selon la revendication 1,
**caractérisé en ce qu'**
on ajoute le gel du mélange de polymère, tout en agitant, dans un appareil de dissolution planétaire.

3. Procédé selon la revendication 1 ou 2,
**caractérisé en ce que**
le mélange polymère contient d'autres additifs habituels du groupe des plastifiants, des charges, des pigments, des agents de protection contre le vieillissement et/ou des agents adhésiphores.

4. Procédé selon l'une des revendications précédentes,
**caractérisé en ce que**
le gel se compose de 77 % en poids d'ester alkylsulfonique de phénol, de 12 % en poids d'EVA et de 11 % en poids de microcire.

5. Procédé selon l'une des revendications précédentes,
**caractérisé en ce que**
le gel se compose de 85 % en poids d'ester d'acide alkyl sulfonique de phénol, de 8 % en poids de copolymère de PVC (proportion d'acétate de vinyle 5 %) et de 7 % en poids de microcires.

6. Procédé selon l'une des revendications 1 à 3,
**caractérisé en ce que**
le gel se compose de 88 % en poids de phtalate de diisobutyle (DIBP), 3 % en poids d'EVA et 9 % en poids de polymère de PVC (proportion d'acétate de vinyle 5 %).

7. Utilisation de la composition préparée selon l'une des revendications précédentes comme masse d'étanchéité pour le joint, adhésif et/ou produit d'étanchéité.
